(19) **Europäisches Patentamt / European Patent Office / Office européen des brevets**

(11) **EP 4 362 046 B1**

(12) **FASCICULE DE BREVET EUROPEEN**

(45) Date de publication et mention
de la délivrance du brevet:
**13.08.2025 Bulletin 2025/33**

(21) Numéro de dépôt: **23206315.6**

(22) Date de dépôt: **27.10.2023**

(51) Classification Internationale des Brevets (IPC):
**G21C 17/017** (2006.01)   G06F 123/02 (2023.01)
G06F 18/00 (2023.01)

(52) Classification Coopérative des Brevets (CPC):
**G21C 17/017;** G06F 2123/02; G06F 2218/10;
G06F 2218/12

(54) **PROCÉDÉ DE DÉTECTION DE DÉFAUTS DANS UN ÉCHANGEUR THERMIQUE À TUBES**

VERFAHREN ZUR FEHLERERKENNUNG IN EINEM RÖHRENWÄRMETAUSCHER

METHOD FOR DETECTING DEFECTS IN A TUBE HEAT EXCHANGER

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **28.10.2022 FR 2211290**

(43) Date de publication de la demande:
**01.05.2024 Bulletin 2024/18**

(73) Titulaire: **Electricité de France
75008 Paris (FR)**

(72) Inventeurs:
• **MURE, Joseph
75017 PARIS (FR)**
• **PAUL, Nicolas
93100 MONTREUIL (FR)**
• **VALLANCE, Loïc
75009 PARIS (FR)**

(74) Mandataire: **Regimbeau
20, rue de Chazelles
75847 Paris Cedex 17 (FR)**

(56) Documents cités:
• **VAN VAERENBERGH STEVEN ET AL: "Pattern
Localization in Time Series Through Signal-To-
Model Alignment in Latent Space", 2018 IEEE
INTERNATIONAL CONFERENCE ON
ACOUSTICS, SPEECH AND SIGNAL
PROCESSING (ICASSP), IEEE, 15 April 2018
(2018-04-15), pages 2711 - 2715, XP033401213,
DOI: 10.1109/ICASSP.2018.8461890**
• **JAVIER GARCÍA-MARTÍN ET AL: "Non-
destructive techniques based on eddy current
testing", SENSORS, MDPI, CH, vol. 11, no. 3, 28
February 2011 (2011-02-28), pages 2525 - 2565,
XP002718104, ISSN: 1424-8220, DOI: 10.3390/
S110302525**

## Description

### Domaine technique

La présente invention se rapporte d'une façon générale au domaine de la maintenance d'un échangeur thermique à tubes. Plus précisément, l'invention s'applique à la recherche de défauts dans les tubes de l'échangeur thermique à partir de signaux issus d'une sonde de mesure passant à l'intérieur de chaque tube.

### Arrière-plan technologique

Un échangeur thermique à tubes tel qu'un générateur de vapeur est généralement composé d'un faisceau de tubes dans lesquels circule le fluide chaud, et autour desquels circule le fluide à chauffer. Par exemple, dans le cas d'un générateur de vapeur d'une centrale nucléaire de type REP, les générateurs de vapeur sont des échangeurs de chaleur qui utilisent l'énergie du circuit primaire issue de la réaction nucléaire pour transformer l'eau du circuit secondaire en vapeur qui alimentera la turbine et ainsi à produire de l'électricité.

Le générateur de vapeur amène le fluide secondaire d'un état d'eau liquide à l'état de vapeur juste en limite de saturation, en utilisant la chaleur de l'eau primaire. Celle-ci circule dans des tubes autour desquels circule l'eau secondaire. La sortie du générateur de vapeur est le point le plus haut en température et pression du circuit secondaire.

La surface d'échange, séparant physiquement les deux circuits, est ainsi constituée d'un faisceau tubulaire, composé de 3500 à 5600 tubes, selon le modèle, dans lesquels circule l'eau primaire portée à haute température (e.g. 320°C) et haute pression (e.g. 155bars).

Afin d'assurer le bon fonctionnement du générateur de vapeur, il est nécessaire de procéder périodiquement à l'inspection des tubes de celui-ci. N'étant pas directement accessible à un opérateur, on utilise une sonde de mesure qui parcourt l'intérieur des tubes pour obtenir des signaux de mesure dont l'analyse doit permettre de détecter et caractériser les éventuels défauts des tubes.

Un exemple typique de sonde de mesure est une sonde à courant de Foucault, également désignée sonde SAX. Les courants de Foucault apparaissent dans un matériau conducteur lorsque l'on fait varier le flux magnétique à proximité. On fait ainsi circuler dans un tube du générateur de vapeur une sonde à courant de Foucault et on mesure avec celle-ci un signal de mesure fonction de l'environnement dans lequel la sonde se trouve, duquel on peut extraire des informations quant à des anomalies dans le tube. Une variation de l'induction magnétique, typiquement par une bobine dans laquelle circule un courant alternatif, engendre des courants de Foucault, dont la variation induite du champ magnétique est détectée. Typiquement, on mesure la différence de tension engendrée par la variation d'impédance de la bobine.

Une fois obtenus les signaux de mesure résultant du passage d'une sonde de mesure dans des tubes du générateur de vapeur, il faut encore les analyser afin d'y détecter d'éventuelles anomalies qui seraient représentatives de la présence d'un défaut dans un tube. Habituellement, cette analyse est effectuée par un opérateur qui passe en revue les signaux de mesure. Il s'agit d'une méthode extrêmement longue, notamment en raison du grand nombre de tubes. Cette approche présente en outre un risque non négligeable d'erreur, reposant sur l'expérience et la compétence d'un opérateur humain faillible.

De plus, l'approche la plus simple consiste à détecter un dépassement local d'amplitude, par comparaison à un seuil. Si cette approche fonctionne dans les zones d'un tube où celui-ci n'est pas en contact avec d'autres éléments, elle est inopérante lorsque d'autres éléments se trouvent au voisinage des tubes. En outre, les tubes peuvent présenter des variations de géométries qui peuvent rendre difficile l'interprétation des variations d'amplitude.

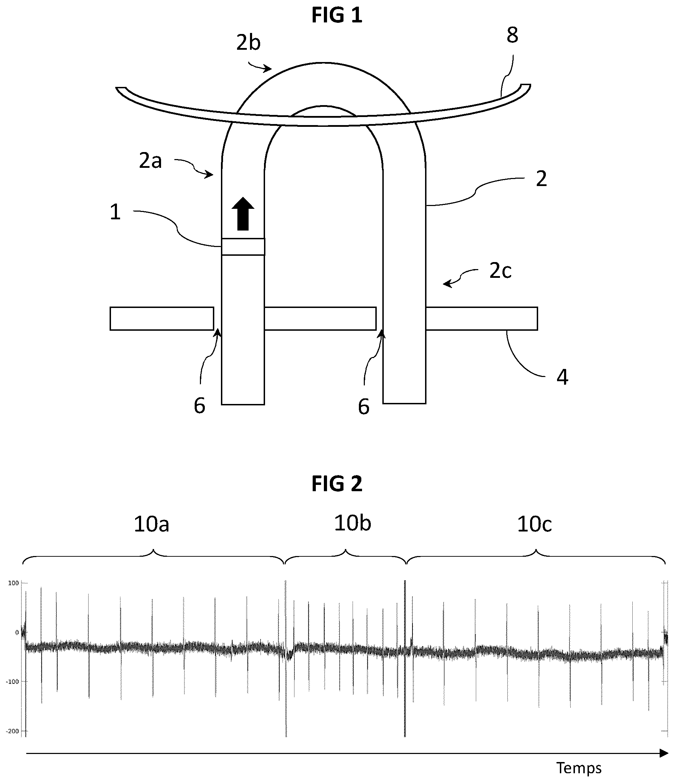

La figure 1 montre un exemple de sonde de mesure 1 parcourant un tube 2 d'un générateur de vapeur pour acquérir un signal de mesure. Les tubes 2 du générateur de vapeur sont maintenus par des plaques entretoises 4 disposées généralement perpendiculairement aux tubes qui les traversent. Afin de laisser passer l'eau qui se vaporise, des passages 6 de tubes 2 de ces plaques entretoises 4 sont foliés, c'est-à-dire que leur forme présente des lobes autour des tubes 2. Comme l'eau passe de l'état liquide à l'état vapeur, elle dépose toutes les matières qu'elle contenait. Si les dépôts de matière se font dans les lobes, ils diminuent la section libre du passage 6 : c'est le colmatage, qui est donc l'obturation progressive, par des dépôts, des trous ou passages 6 destinés au passage du mélange eau/vapeur.

Un tube 2 d'un générateur de vapeur comprend généralement une portion rectiligne 2a de la branche chaude, où arrive le fluide caloporteur chaud dans le tube, suivie par une partie courbe 2b, désignée comme le cintre, et enfin une portion rectiligne 2c de la branche froide, d'où repart le fluide caloporteur refroidi. Des barres anti-vibrations 8 sont alors présentes au niveau de la partir courbe 2b.

Ainsi, la présence des plaques entretoises 4, de barres anti-vibrations 8, ou d'un dépôt colmatant dans les passages 6 des plaques entretoises 4 influence le signal de mesure, et un éventuel défaut ne peut plus être détecté simplement en recherchant une variation d'amplitude du signal de mesure. Une solution est de comparer le signal de mesure dans une zone particulière avec un signal de référence correspondant au signal de mesure dans cette zone en l'absence de défaut. Par exemple, dans le cas du passage d'une plaque entretoise 4, le signal de mesure peut être comparé à un signal de référence préalablement appris qui correspond au passage d'une plaque entretoise 4 pour un tube 2 sans défaut.

La figure 2 montre ainsi un exemple de variations d'amplitude d'une composante d'un signal de mesure acquis par une sonde 1 à courant de Foucault le long d'un tube 2 d'un générateur de vapeur, en fonction du temps et donc du trajet de la sonde 1 le long du tube 2. Une première partie 10a correspondant à la portion rectiligne 2a de la branche chaude, où arrive le fluide caloporteur chaud dans le tube. On constate la présence de brusques variations d'amplitude liées aux traversées du bord supérieur de la plaque tubulaire, de la plaque de répartition de débit puis (à partir de la troisième) des plaques entretoises 4, à des intervalles à peu près réguliers. Vient ensuite une deuxième partie 10b correspondant à la portion courbée 2b du tube. Ici encore apparaissent de brusques variations d'amplitude, mais cette fois liées aux traversées des plaques antivibratoires 8 par la sonde de mesure 1. Par rapport à la première partie 10a, la période des brusques variations d'amplitude est plus courte et moins régulière. Enfin une troisième partie 10c correspond à une portion rectiligne 2c de la branche froide, d'où repart le fluide caloporteur refroidi. On retrouve ici les brusques variations d'amplitude liées aux traversées des plaques entretoises 4, puis de la plaque de répartition de débit et du bord supérieur de la plaque tubulaire rencontrées dans la première partie 10a.

Théoriquement, la réaction de la sonde de mesure 1 au passage d'un élément connu peut être anticipé, et il serait alors possible d'utiliser le signal de référence correspondant. Cependant, le signal de référence peut ne pas être représentatif de l'environnement de la sonde de mesure 1, et donc peut ne pas permettre de détecter les défauts. Ainsi qu'évoqué plus haut, il arrive par exemple qu'un passage 6 de tube 2 d'une plaque entretoise 4 soit colmaté, avec un dépôt de taille et de constitution inconnue, ce qui rend inopérant la comparaison avec un signal de référence pour détecter un défaut du tube 2. De plus, le déplacement de la sonde de mesure 1 dans le tube 2 peut présenter des variations locales de vitesse, en particulier dans la zone courbée du tube puisque la sonde de mesure 1 ne se déplace plus en ligne droite. La position des éléments extérieurs tels que les barres antivibratoires 8 peut aussi ne pas être connue avec précision. Il peut en résulter une désynchronisation des signaux de mesure, alors même qu'il est nécessaire de bien connaître la correspondance entre le signal de mesure et la position de la sonde de mesure 1 afin de pouvoir utiliser un éventuel signal de référence au bon endroit dans le signal de mesure.

Par conséquent, il y a un besoin pour un procédé de détection de défauts dans les tubes d'un échangeur thermique qui permette d'identifier automatiquement les tubes contenant potentiellement un défaut.

Des contrôles non destructifs des tubes d'un générateur de chaleur comprenant une synchronisation de chaque signal de mesure avec une série temporelle de référence en appliquant une déformation temporelle dynamique, DTW, sur le signal de mesure et la série temporelle de référence, est connue du document VAN VAERENBERGH STEVEN ET AL: "Pattern Localization in Time Series Through Signal-To-Model Alignment in Latent Space", 2018 IEEE INTERNATIONAL CONFERENCE ON ACOUSTICS, SPEECH AND SIGNAL PROCESSING (ICASSP), IEEE, (2018-04-15), pages 2711-2715, DOI: 10.1109/ICASSP.2018.8461890.

**Présentation de l'invention**

Il est proposé un procédé de maintenance d'un échangeur thermique à tubes comprenant :

- une obtention de signaux de mesure résultant du passage d'une sonde de mesure dans des tubes de l'échangeur thermique,
- détermination d'une série temporelle de référence correspondant à une moyenne, à chaque instant, des signaux de mesure,
- synchronisation de chaque signal de mesure avec la série temporelle de référence en appliquant une déformation temporelle dynamique, DTW, sur ledit signal de mesure et la série temporelle de référence,
- recherche d'une éventuelle anomalie en mesurant une éventuelle déviation locale d'un signal de mesure synchronisé par rapport aux autres signaux de mesure synchronisés avec la série temporelle de référence.

Grâce au procédé proposé, il est possible d'identifier automatiquement les tubes contenant potentiellement un défaut. Cela permet d'écarter une grande majorité des signaux à analyser, qui correspondent clairement à des zones de tube saines. Les opérateurs peuvent ainsi se concentrer uniquement sur les quelques zones où le signal présente des caractéristiques anormales. Ainsi, le procédé proposé permet avantageusement de réduire sensiblement le temps d'analyse et de diminuer le risque d'erreur de diagnostic.

Ce procédé est avantageusement complété par les caractéristiques suivantes, prises seules ou en une quelconque combinaison de celles-ci techniquement possible :

- chaque signal de mesure est une série temporelle multidimensionnelle comprenant P composantes, P entier naturel supérieur ou égal à 2, et la série temporelle de référence comprend P composantes ;
- la DTW est appliquée multi-dimensionnellement sur les P composantes simultanément ;
- la recherche d'une éventuelle anomalie est effectuée composante par composante ;
- le procédé comprend une sélection, parmi les signaux de mesure, de signaux de mesure résultant du passage d'une sonde de mesure dans des tubes appartenant à un sous-ensemble de tubes regroupés selon la similarité de leurs caractéristiques physiques ;

- la recherche d'une éventuelle anomalie en mesurant une éventuelle déviation locale d'un signal de mesure par rapport aux autres signaux de mesure comprend la détermination d'une distance entre une valeur du signal de mesure et les valeurs correspondantes des autres signaux de mesure ;
- un filtre médian est appliqué aux distances déterminées lors de la recherche d'anomalies ;
- la sonde de mesure est une sonde à courants de Foucault multifréquence.

L'invention concerne également un produit programme d'ordinateur comprenant des instructions de code de programme pour l'exécution des étapes du procédé selon l'invention, lorsque ledit programme est exécuté sur un ordinateur. Le produit programme d'ordinateur peut prendre la forme d'un médium non volatile sur lequel sont stockées les instructions, pouvant être toute sorte de mémoire : disque dur, SSD, mémoire flash, etc.

**Présentation des figures**

D'autres caractéristiques, buts et avantages de l'invention ressortiront de la description qui suit, qui est purement illustrative et non limitative, et qui doit être lue en regard des dessins annexés sur lesquels :

- la figure 1 montre schématiquement un exemple de sonde de mesure parcourant un tube d'un générateur de vapeur pour acquérir des signaux de mesure,
- la figure 2 montre un exemple de représentation graphique d'une composante d'un signal de mesure acquis par une sonde à courant de Foucault le long d'un tube d'un générateur de vapeur,
- la figure 3 est un diagramme montrant des étapes de mises en œuvre d'un procédé selon un mode de réalisation possible de l'invention,
- la figure 4 montre un exemple d'un extrait d'une première composante d'un signal de mesure correspondant au passage d'une plaque entretoise par la sonde de mesure, sans synchronisation,
- la figure 5 montre l'exemple de la figure 4 après synchronisation par DTW avec la série temporelle de référence,
- la figure 6 montre un exemple d'un extrait d'une seconde composante d'un signal de mesure correspondant au passage d'une plaque entretoise par la sonde de mesure, sans synchronisation,
- la figure 7 montre un l'exemple de la figure 6 après synchronisation par DTW avec la série temporelle de référence.

**Description détaillée**

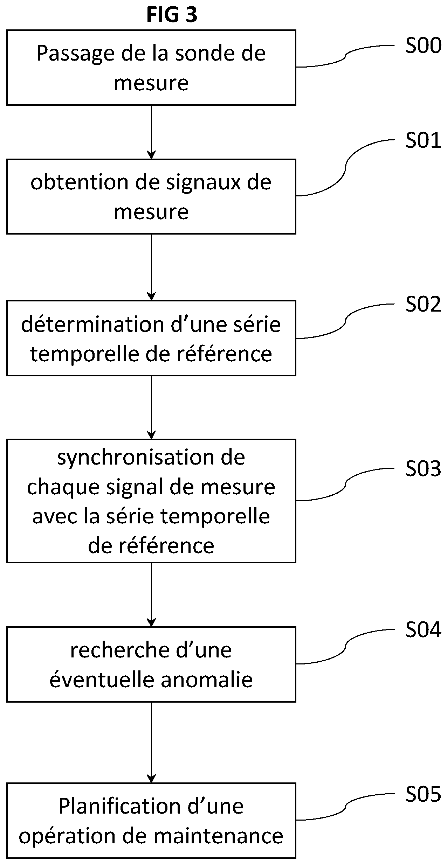

En référence à la Figure 1 et à la Figure 3, il va être décrit un procédé de maintenance comprenant la détection d'une éventuelle anomalie d'un signal de mesure qui pourrait être causée par un défaut dans le tube 2 de l'échangeur thermique. Un défaut est typiquement une fissure dans la paroi du tube 2, mais peut également être une autre altération de la structure du tube 2 susceptible de faire varier localement le signal de mesure.

Une première étape (S01) consiste à obtenir des signaux de mesure résultant du passage d'une sonde de mesure 1 dans des tubes 2 de l'échangeur thermique. Les signaux de mesure peuvent être de diverses natures, dès lors que les signaux de mesure sont susceptibles de présenter des variations liées à la présence d'un défaut dans un tube 2. Par exemple, les signaux de mesure peuvent être des réponses électriques à stimulations telles que la génération de courant de Foucault, comme évoqué plus haut, ou peuvent résulter d'acquisition ultrasonores au moyen d'une sonde ultrasonore, ou bien encore résulter de la détection d'ondes radio. De préférence, les signaux de mesure sont multidimensionnels, comprenant plusieurs composantes chacune correspondant à un canal d'acquisition de la sonde de mesure 1. De préférence, chaque signal de mesure est une série temporelle multidimensionnelle comprenant P composantes, P entier naturel supérieur ou égal à 2, et de préférence supérieur ou égal à 4.

Il est ainsi possible de prévoir une étape préalable (étape S00) de passage de la sonde de mesure 1 dans les tubes 2 pour acquérir les signaux de mesure qui sont alors collectés, mais les signaux de mesure peuvent être obtenu autrement, et il notamment possible d'obtenir des signaux de mesure stockés sur un support de données, par exemple issu d'acquisitions dans le passé.

A titre d'exemple, et dans un mode de réalisation préférentiel utilisé pour la suite de la description, les signaux de mesure sont issus d'une sonde à courants de Foucault multifréquence. Un signal de mesure se présente alors sous la forme d'une impédance complexe, avec des composantes réelles et imaginaires selon plusieurs fréquences issues d'autant de canaux d'acquisition. Par exemple, on peut avoir quatre fréquences, résultant en un signal de mesure à huit composantes. Les fréquences sont par exemple comprises entre 100 kHz et 600 kHz. La Figure 2 montre un exemple de variations d'amplitude d'une composante d'un signal de mesure acquis par une sonde à courant de Foucault le long d'un tube 2 d'un générateur de vapeur, en fonction du temps et donc du trajet de la sonde de mesure 1 le long du tube 2.

En raison du grand nombre de tubes 2 présents dans un échangeur thermique, un grand nombre de signaux de mesure peut ainsi être obtenu. Typiquement, on dispose au moins de plusieurs centaines de signaux de mesure. Or, comme ceux-ci sont acquis indépendamment les uns des autres, et que la vitesse de déplacement de la sonde de mesure 1 peut varier en fonction des tubes 2, les signaux de mesure ne sont pas synchronisés entre eux. Par exemple, le passage d'une même plaque entretoise sera présent à différents instants dans deux signaux de mesure. Il est également possible que les tubes 2 aient des longueurs variables. Il convient donc de synchroniser les signaux de mesure, en faisant correspondre les principales variations d'amplitude rencontrées sur tous les signaux de mesure.

Préalablement, il est possible d'effectuer un rééchantillonnage des séries temporelles des signaux de mesure visant à assurer qu'elles aient toutes le même nombre de pas de temps. Un tel rééchantillonnage est connu de l'homme du métier, et implique par exemple une interpolation ou un ajout de valeurs intercalaires (typiquement zéros) suivi d'un filtrage passe-bas.

Après rééchantillonnage, les signaux de mesure se présentent en tant que Q séries temporelles $x_1$, $x_2$, ...., $x_Q$ de taille N, c'est-à-dire que pour tout entier i compris entre 1 et Q, la série temporelle $x_i$ est une fonction est une fonction $\{1,\ldots,N\}\rightarrow\mathbb{R}^P$, avec P le nombre de composantes du signal de mesure.

Une série temporelle de référence est ensuite déterminée (étape S02). Cette série temporelle de référence correspond à la moyenne arithmétique, à chaque instant, des signaux de mesure : soit $\bar{x}$ : $\{1,\ldots,N\}\rightarrow\mathbb{R}^P$ la série temporelle de référence définie, pour tout élément t ∈{1,...,N}, par :

$$\bar{x}(t) = \frac{1}{Q}\sum_{i=1}^{Q} x_i(t).$$

Il est ensuite procédé à une synchronisation (étape S03) de chaque signal de mesure avec la série temporelle de référence en appliquant une déformation temporelle dynamique, ou DTW pour l'anglais « Dynamic Time Warping », sur ledit signal de mesure et la série temporelle de référence. Pour tout i∈{1,...,Q}, la DTW fournit une fonction de synchronisation $f_i$:{1,..., N}→{1,..., N}qui minimise, sous certaines contraintes ($f_i$ doit notamment être croissante), la somme des écarts suivantes :

$$\sum_{t=1}^{N}\|x_i \circ f_i(t) - \bar{x}(t)\|$$

où les doubles barres désignent la norme euclidienne.

Il est à noter que puisque chaque signal de mesure est synchronisé avec la série temporelle de référence, par transitivité, les signaux de mesure deviennent synchronisés entre eux. En outre, puisque la série de référence est construite à partir de l'ensemble des signaux de mesure, la synchronisation ne repose donc pas sur la désignation arbitraire de l'un des signaux de mesure comme étant la référence ou par le choix d'un signal extérieur.

Habituellement, la DTW met en œuvre un calcul de distance entre séries, ce qui nécessite d'appliquer la DTW à chaque couple de série, soit Q(Q-1)/2 calculs de DTW lorsque Q séries sont traitées. En déterminant et utilisant la série de référence, le nombre de calculs de DTW est réduit à Q, la DTW étant appliquée à chaque série relativement à la série de référence. Or, l'emploi de la DTW est très gourmand en calcul, et donc en temps et en ressources. Cette réduction du temps de calcul permet de grouper un grand nombre de séries et d'améliorer la qualité de la détection. De fait, de préférence le nombre de signaux de mesure pris en compte est supérieur à 100, de préférence supérieur à 500, et de préférence encore supérieur à 1000.

Comme évoqué plus haut, les signaux de mesure résultant de l'acquisition par sondes de mesure 1 à courants de Foucault sont à valeurs multidimensionnelles. Plus précisément, l'existence de quatre canaux à valeurs complexes font qu'elles sont à valeurs dans $\mathbb{C}^4$. Les valeurs complexes sont séparées en parties réelle et imaginaire afin d'obtenir un signal de mesure à valeurs dans $\mathbb{R}^8$. Dans la suite, on notera XFA, YFA, XF1, YF1, XF2, YF2, XF3, YF3 chacune des 8 valeurs composant le signal de mesure, les valeurs XF étant dérivées des parties réelles tandis que les valeurs YF sont dérivées des parties imaginaires, la dernière lettre A désignant une acquisition en mode absolu tandis que la présence d'un chiffre indique une acquisition en mode différentiel. Bien entendu, il ne s'agit que d'un exemple limitatif, et le signal de mesure peut être différent, et le nombre P de composantes peut être différent de 8. De préférence toutefois, P est strictement supérieur à 3.

**De préférence,** la DTW est appliquée multidimensionnellement sur les P composantes simultanément du signal de mesure : la DTW est appliquée aux vecteurs dans $\mathbb{R}^P$ regroupant les composantes du signal de mesure. Un signal de mesure à valeurs dans $\mathbb{R}^P$ subira la déformation temporelle minimisant la somme des distances euclidiennes entre ses points (dans $\mathbb{R}^P$) et les points correspondants de la série de référence. Pour être retenue, une déformation doit donc être avantageuse dans toutes les composantes du signal de mesure et non une seule. Du fait que les éléments extérieurs tels que les plaques entretoises 4 sont visibles sur toutes les composantes d'un signal de mesure, appliquer la DTW aux signaux de mesure à valeurs dans $\mathbb{R}^P$ plutôt que séparément à chaque composante permet de la stabiliser et évite des erreurs de synchronisation (comme par exemple la synchronisation d'un pic aberrant dans une composante avec un bord de plaque entretoise 4 visible sur le signal de référence).

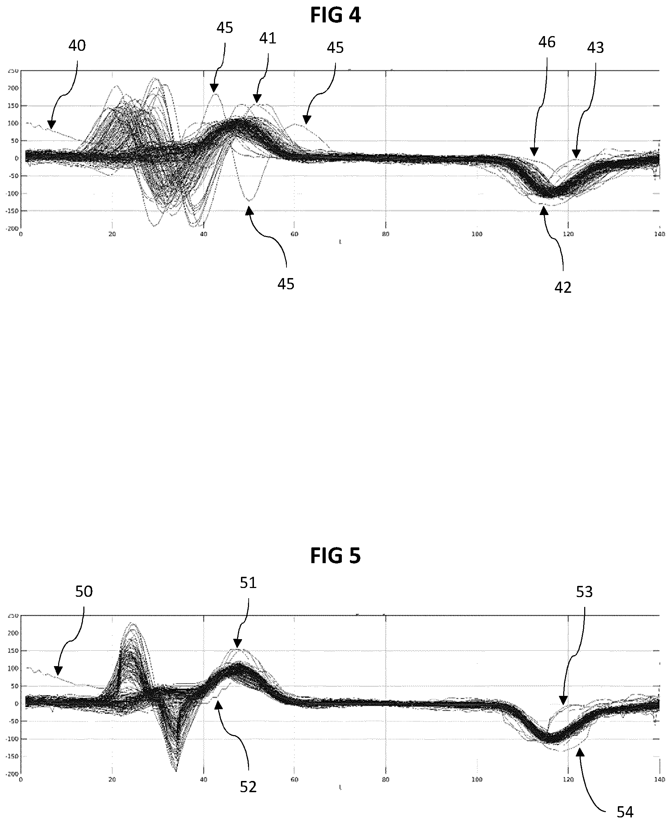

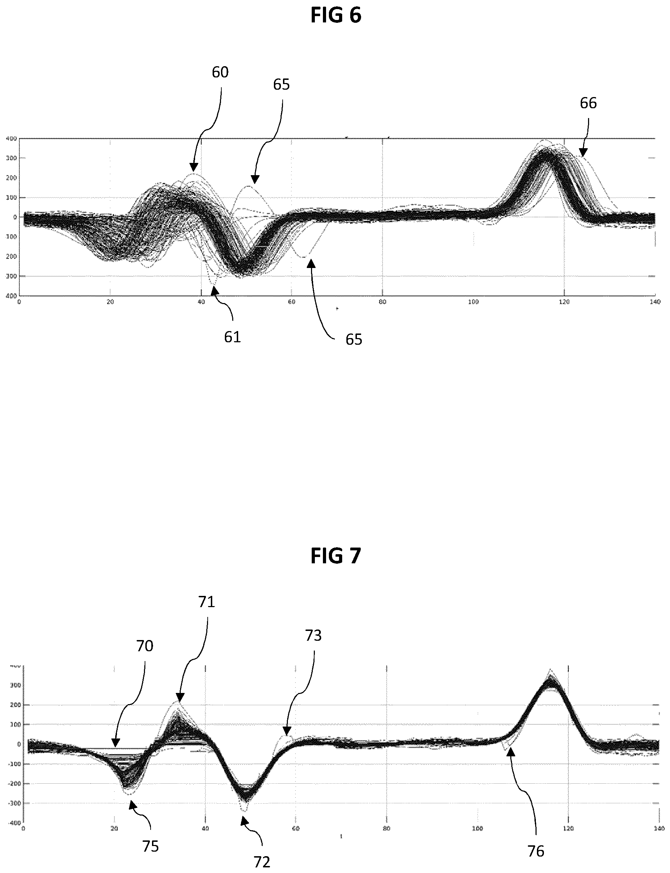

La Figure 4 montre un exemple d'un extrait d'une première composante, en l'occurrence YF2, d'un signal de mesure correspondant à la traversée d'une plaque entretoise 4 de la branche chaude par la sonde de mesure 1, avant synchronisation. La figure 5 montre l'exemple de la Figure 4 après synchronisation par DTW avec la série temporelle de référence, qui est la moyenne des signaux de mesure. La figure 6 montre un exemple d'un extrait d'une deuxième composante, en l'occurrence XF3, d'un signal de mesure correspondant à la traversée d'une plaque entretoise 4 de la branche chaude par la sonde de mesure 1, avant synchronisation. La Figure 7 montre un l'exemple de la Figure 6 après synchronisation par DTW avec la série temporelle de référence, qui est la moyenne des signaux de mesure. Les unités sont arbitraires et n'ont aucune importance, seules comptent les déviations par rapport aux autres signaux de mesure.

On constate que la synchronisation permet de rapprocher les signaux de forme similaire, et certains signaux se détachent de l'ensemble ainsi formé : l'étape suivante du procédé a justement pour objet de détecter les signaux de mesure qui se détachent. L'étape suivante est ainsi une recherche (étape S04) d'une éventuelle anomalie en mesurant une éventuelle déviation locale d'un signal de mesure par rapport aux autres signaux de mesure. De préférence, la recherche d'une éventuelle anomalie est effectuée composante par composante, et non pas sur un vecteur dans $\mathbb{R}^P$.

La recherche d'une éventuelle anomalie peut par exemple être effectuée via le facteur local d'anomalie, plus connu sous l'acronyme LOF pour l'anglais « Local Outlier Factor ». La LOF est basée sur un concept de densité locale, où la densité est donnée par les k plus proches voisins, dont la distance est utilisée pour estimer la densité. En comparant la densité locale d'une composante d'un signal de mesure aux densités locales de ses voisines, on peut identifier les régions de densité similaire, et les parties d'une composante d'un signal de mesure qui ont une densité moindre que ses voisines, qui sont alors considérées comme des anomalies.

La LOF requiert pour sa mise en œuvre des séries temporelles synchrones, comme le sont les signaux de mesure après DTW. En effet, dès lors qu'un motif d'une série temporelle ne survient pas au même moment qu'un motif similaire sur plusieurs autres séries temporelles, le facteur local d'anomalie de la série temporelle augmente. La LOF est appliquée séparément à chaque composante, et ne se fonde donc pas sur la distance euclidienne entre les vecteurs dans $\mathbb{R}^P$ regroupant les composantes du signal de mesure. Pour qu'une anomalie soit détectée, il suffit qu'elle soit présente sur l'une des composantes du signal de mesure.

L'approche proposée permet de mettre en évidence des anomalies qui n'auraient pas été détectées ou à l'inverse permet de considérer comme exempt d'anomalies des signaux de mesure présentant des valeurs atypiques. Par exemple, en référence à la Figure 4, le procédé permet de mettre en évidence les anomalies dans les signaux de mesure correspondant aux courbes 40, 41, 42 ou 43. En revanche, malgré leur déviation apparente avant synchronisation, les signaux de mesure correspondant aux courbes 45 ou 46 ne seront finalement pas considérées comme présentant des anomalies. La DTW permet de compenser d'éventuels décalages temporels entre les signaux de mesure, qui ne sont pas des anomalies. Ainsi, sur la Figure 5, le signal de mesure qui correspondait à la courbe 45 de la Figure 4 se trouve resynchronisé avec les autres et ne présente plus de comportement atypique. En revanche, les courbes déviant du comportement majoritaires 50, 51, 52, 53, 54 sont toujours mises en évidence.

En référence à la Figure 6, le procédé permet de mettre en évidence les anomalies dans les signaux de mesure correspondant aux courbes 60, 61. En revanche, malgré leur déviation apparente avant synchronisation, les signaux de mesure correspondant aux courbes 65 ou 66 ne seront finalement pas considérés comme présentant des anomalies. La DTW permet, en recalant les signaux, de mettre en évidence des comportements atypiques qui n'apparaissaient pas comme initialement visibles. Ainsi, sur la Figure 7, le signal de mesure correspondant à la courbe 70 présente une anomalie non initialement visible, alors que d'autres restent mises en évidence, comme par exemple les signaux de mesure des courbes 60 et 61, qui correspondent désormais aux courbes 71 et 72, et dont la déviation par rapport au comportement majoritaire reste visible. D'autres courbes 75, 76, bien que présentant parfois des déviations, ne sont pas considérées comme des anomalies par le procédé.

D'autres méthodes de recherche d'anomalies peuvent être employées, d'autant plus les signaux de mesure sont, après DTW, synchronisés entre eux, ce qui rend possible l'utilisation d'autres méthodes nécessitant d'être appliquées sur des signaux synchronisés, tel que des estimateurs à noyau ou des forêts d'isolement.

La recherche d'une éventuelle anomalie, par exemple par la LOF, peut être effectuée sur l'ensemble d'une composante des signaux de mesure. De préférence toutefois, la recherche d'une éventuelle anomalie tronçon par tronçon, c'est-à-dire sur des sous-parties temporelles de la composante des signaux de mesure. Ainsi, en cas de détection d'une anomalie, une information de localisation du défaut dans le tube 2 est directement accessible via l'identification du tronçon dans lequel l'anomalie a été détectée. Il est même possible d'appliquer la méthode de détection (LOF ou autre) à chaque instant. La méthode est alors appliquée séparément à chaque canal d'acquisition et à chaque instant, et porte donc sur des scalaires (éléments de R). Une méthode telle que la LOF reste fondée sur la distance euclidienne, qui se réduit ici à la valeur absolue de l'écart entre valeurs.

De préférence, un filtre médian peut être appliqué au résultat de la méthode de détection telle que la LOF par instant avec une taille de fenêtre de la longueur d'un défaut typique (par exemple 2 mm), de façon à régulariser l'identification des points aberrants. Dans cette variante, seuls les points aberrants - dont la LOF médiane dépasse un certain seuil - consécutifs de taille supérieure à la longueur d'un défaut typique sont conservés. Ainsi, l'application instant par instant de la LOF permet à la fois d'identifier si le signal est défectueux mais également d'obtenir la localisation et la longueur du défaut dans le signal.

Les tubes 2 d'un échangeur thermique peuvent présenter des particularités géométriques qui peuvent être exploitées, et en particulier dans le cas d'un générateur de vapeur la présence d'une partie courbe 2b - le cintre - encadrée par deux parties rectilignes 2a, 2c - la branche chaude et la branche froide. Or la taille de la partie courbe 2b n'est pas la même pour tous les tubes 2 : plus le tube 2 est éloigné de l'axe central du générateur de vapeur, plus la longueur de la partie courbe 2b augmente. En même temps, les tubes 2 ne rencontrent plus alors le même nombre de barres antivibratoires 8. Or, ces variations dans le profil des tubes 2 sont connues a priori, et il est possible de grouper les tubes 2 présentant des caractéristiques géométriques similaires pour améliorer la détection des défauts.

Ainsi, le procédé peut comprendre la sélection, parmi les signaux de mesure - résultant du passage d'une sonde de mesure 1 dans des tubes 2 - appartenant à un sous-ensemble de tubes 2 regroupés selon la similarité de leurs caractéristiques physiques. Le reste du procédé est alors appliqué aux signaux de mesure ainsi sélectionnés.

Une fois qu'une anomalie est détectée dans un signal de mesure, le tube 2 correspondant peut être considéré comme présentant un défaut. Il est alors possible de planifier une opération de maintenance (étape S05). Il est par exemple possible de procéder à une inspection supplémentaire, plus poussée, de ce tube 2, voire même de planifier et procéder à une opération de réparation ou de remplacement de ce tube si cette opération est techniquement faisable. La détection des défauts peut également valider le redémarrage de l'échangeur thermique ou au contraire entraîner l'arrêt définitif de l'échangeur thermique.

L'invention n'est pas limitée au mode de réalisation décrit et représenté aux figures annexées. Des modifications restent possibles, sans sortir pour autant du domaine de protection de l'invention, qui est défini dans les revendications.

**Revendications**

1. Procédé de maintenance d'un échangeur thermique à tubes comprenant :

   - une obtention (S01) de signaux de mesure résultant du passage d'une sonde de mesure (1) dans des tubes (2) de l'échangeur thermique,
   - détermination (S02) d'une série temporelle de référence correspondant à une moyenne, à chaque instant, des signaux de mesure,
   - synchronisation (S03) de chaque signal de mesure avec la série temporelle de référence en appliquant une déformation temporelle dynamique, DTW, sur ledit signal de mesure et la série temporelle de référence,
   - recherche d'une éventuelle anomalie (S04) en mesurant une éventuelle déviation locale d'un signal de mesure synchronisé par rapport aux autres signaux de mesure synchronisés avec la série temporelle de référence.

2. Procédé selon la revendication 1, dans lequel chaque signal de mesure est une série temporelle multidimensionnelle comprenant P composantes, P entier naturel supérieur ou égal à 2, et la série temporelle de référence comprend P composantes.

3. Procédé selon la revendication précédente, dans lequel la DTW est appliquée multi-dimensionnellement sur les P composantes simultanément.

4. Procédé selon l'une des deux revendications précédentes, dans lequel la recherche d'une éventuelle anomalie est effectuée composante par composante.

5. Procédé selon l'une des revendications précédentes, comprenant une sélection, parmi les signaux de mesure, de signaux de mesure résultant du passage d'une sonde de mesure (1) dans des tubes (2) appartenant à un sous-ensemble de tubes (2) regroupés selon la similarité de leurs caractéristiques physiques.

6. Procédé selon l'une quelconque des revendications précédentes, dans lequel la recherche d'une éventuelle anomalie en mesurant une éventuelle déviation locale d'un signal de mesure par rapport aux autres signaux de mesure comprend la détermination d'une distance entre une valeur du signal de mesure et les valeurs correspondantes des autres signaux de mesure.

7. Procédé selon la revendication précédente, dans lequel un filtre médian est appliqué aux distances déterminées lors de la recherche d'anomalies.

8. Procédé selon l'une quelconque des revendications précédentes, dans lequel la sonde de mesure est une sonde à courants de Foucault multifréquence.

9. Produit programme d'ordinateur comprenant des instructions de code de programme pour l'exécution des étapes du procédé selon l'une quelconque des revendications précédentes, lorsque ledit programme est exécuté sur un ordinateur.

## Patentansprüche

1. Verfahren zur Wartung eines Rohrbündelwärmetauschers, umfassend:

   - ein Gewinnen (S01) von Messsignalen, die sich aus dem Durchgang einer Messsonde (1) durch Rohre (2) des Wärmetauschers ergeben,
   - Bestimmen (S02) einer Referenzzeitreihe, die zu jedem Zeitpunkt einem Mittelwert der Messsignale entspricht,
   - Synchronisieren (S03) jedes Messsignals mit der Referenzzeitreihe durch Anwenden einer dynamischen Zeitverzerrung, DTW, auf das Messsignal und die Referenzzeitreihe,
   - Suchen nach einer möglichen Anomalie (S04) durch Messen einer möglichen lokalen Abweichung eines synchronisierten Messsignals in Bezug auf die anderen Messsignale, die mit der Referenzzeitreihe synchronisiert sind.

2. Verfahren nach Anspruch 1, wobei jedes Messsignal eine mehrdimensionale Zeitreihe ist, die P Komponenten umfasst, wobei P eine natürliche Zahl größer oder gleich 2 ist, und die Referenzzeitreihe P Komponenten umfasst.

3. Verfahren nach vorhergehendem Anspruch, wobei die DTW mehrdimensional auf die P Komponenten gleichzeitig angewendet wird.

4. Verfahren nach einem der beiden vorhergehenden Ansprüche, wobei die Suche nach einer möglichen Anomalie Komponente für Komponente durchgeführt wird.

5. Verfahren nach einem der vorhergehenden Ansprüche, das eine Auswahl von Messsignalen aus den Messsignalen umfasst, die sich aus dem Durchgang einer Messsonde (1) durch Rohre (2) ergeben, die zu einer Untergruppe von Rohren (2) gehören, die nach der Ähnlichkeit ihrer physikalischen Eigenschaften gruppiert sind.

6. Verfahren nach einem beliebigen der vorhergehenden Ansprüche, wobei die Suche nach einer möglichen Anomalie durch Messen einer möglichen lokalen Abweichung eines Messsignals in Bezug auf die anderen Messsignale die Bestimmung eines Abstands zwischen einem Wert des Messsignals und den entsprechenden Werten der anderen Messsignale umfasst.

7. Verfahren nach vorhergehendem Anspruch, wobei auf die bei der Suche nach Anomalien ermittelten Abstände ein Medianfilter angewendet wird.

8. Verfahren nach einem beliebigen der vorhergehenden Ansprüche, wobei die Messsonde eine Mehrfrequenz-Wirbelstromsonde ist.

9. Rechnerprogrammprodukt, das Programmcodeanweisungen zur Ausführung der Schritte des Verfahrens nach einem beliebigen der vorhergehenden Ansprüche umfasst, wenn das Programm auf einem Rechner ausgeführt wird.

## Claims

1. A method for maintaining a tube heat exchanger, comprising:

   - obtaining (S01) measurement signals resulting from the passage of a measurement probe (1) in the tubes (2) of the heat exchanger,
   - determining (S02) a reference time series corresponding to an average, at each instant, of the measurement signals,
   - synchronising (S03) each measurement signal with the reference time series by applying a dynamic time warping, DTW, to said measurement signal and to the reference time series,
   - searching (S04) for a potential anomaly by measuring a potential local deviation of a synchronised measurement signal with respect to the other measurement signals synchronised with the reference time series.

2. The method according to claim 1, wherein each measurement signal is a multidimensional time series comprising P components, P being a natural integer greater than or equal to 2, and the reference time series comprises P components.

3. The method according to the preceding claim, wherein the DTW is applied multidimensionally on the P components simultaneously.

4. The method according to one of the two preceding claims, wherein the search for a potential anomaly is carried out component by component.

5. The method according to one of the preceding claims, comprising a selection, among the measurement signals, of measurement signals resulting from the passage of a measurement probe (1) in the tubes (2) belonging to a subset of tubes (2) grouped according to the similarity of their physical properties.

6. The method according to any one of the preceding claims, wherein the search for a potential anomaly by measuring a potential local deviation of a measurement signal with respect to other measurement signals comprises determining a distance between a value of the measurement signal and the corresponding values of the other measurement signals.

7. The method according to the preceding claim, wherein a median filter is applied to the distances determined during the search for anomalies.

8. The method according to any one of the preceding claims, wherein the measurement probe is a multifrequency eddy-current probe.

9. A computer program product, comprising program code instructions for executing the steps of the method according to any one of the preceding claims, when said program is executed on a computer.

## FIG 1

## FIG 2

**FIG 3**

```
┌─────────────────────────┐
│   Passage de la sonde de │ ──────── S00
│         mesure           │
└─────────────────────────┘
             │
             ▼
┌─────────────────────────┐
│  obtention de signaux de │ ──────── S01
│         mesure           │
└─────────────────────────┘
             │
             ▼
┌─────────────────────────┐
│  détermination d'une série│ ──────── S02
│  temporelle de référence  │
└─────────────────────────┘
             │
             ▼
┌─────────────────────────┐
│    synchronisation de     │
│  chaque signal de mesure  │ ──────── S03
│  avec la série temporelle │
│      de référence         │
└─────────────────────────┘
             │
             ▼
┌─────────────────────────┐
│     recherche d'une       │ ──────── S04
│    éventuelle anomalie    │
└─────────────────────────┘
             │
             ▼
┌─────────────────────────┐
│    Planification d'une    │ ──────── S05
│ opération de maintenance  │
└─────────────────────────┘
```

## FIG 4

## FIG 5

**FIG 6**

**FIG 7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Pattern Localization in Time Series Through Signal-To-Model Alignment in Latent Space. **VAN VAERENBERGH STEVEN et al.** 2018 IEEE INTERNATIONAL CONFERENCE ON ACOUSTICS, SPEECH AND SIGNAL PROCESSING (ICASSP). IEEE, 15 April 2018, 2711-2715